(19) Europäisches Patentamt
European Patent Office
Office européen des brevets

(11) **EP 4 718 508 A1**

(12) **EUROPEAN PATENT APPLICATION**
published in accordance with Art. 153(4) EPC

(43) Date of publication:
01.04.2026 Bulletin 2026/14

(21) Application number: 24811064.5

(22) Date of filing: 17.05.2024

(51) International Patent Classification (IPC):
$H01M\ 4/13^{(2010.01)}$     $H01M\ 10/0587^{(2010.01)}$
$H01M\ 50/586^{(2021.01)}$     $H01M\ 50/591^{(2021.01)}$
$H01M\ 50/595^{(2021.01)}$

(52) Cooperative Patent Classification (CPC):
Y02E 60/10; Y02P 70/50

(86) International application number:
PCT/JP2024/018355

(87) International publication number:
WO 2024/242057 (28.11.2024 Gazette 2024/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.05.2023 JP 2023084939

(71) Applicant: Panasonic Intellectual Property
Management Co., Ltd.
Kadoma-shi, Osaka 571-0057 (JP)

(72) Inventor: YAMAMOTO, Norihisa
Kadoma-shi, Osaka 571-0057 (JP)

(74) Representative: Novagraaf International SA
Chemin de l'Echo 3
1213 Onex, Geneva (CH)

(54) **ELECTRODE FOR SECONDARY BATTERIES, AND SECONDARY BATTERY**

(57) Provided is an electrode for secondary batteries, which is capable of suppressing deterioration of rapid charge and discharge characteristics. An electrode (30) for secondary batteries constitutes a winding-type electrode body provided with a band-like core body (32) and a mixture layer (34) disposed on the core body (32), and is characterized in that: a longitudinal-direction-side first exposed portion (36), in which the mixture layer (34) is not disposed, is provided at one end part in the longitudinal direction of the core body (32); the longitudinal-direction-side first exposed portion (36) is covered with a first insulating portion (38); and a short-direction-side first exposed portion (44), in which the mixture layer (34) is not disposed, is provided at a position separated from both end parts in the longitudinal direction of the core body (32) at one end part in the short direction of the core body (32).

## Figure 2

EP 4 718 508 A1

# EP 4 718 508 A1

**Description**

TECHNICAL FIELD

The present disclosure relates to an electrode for secondary batteries and a secondary battery.

BACKGROUND

Secondary batteries such as lithium-ion secondary batteries have been used as power sources for a wide range of devices including electric vehicles, and a further increase in capacity has been required. The secondary battery has, for example, a configuration in which a winding-type electrode assembly obtained by winding a positive electrode and a negative electrode with a separator interposed therebetween is sealed in an exterior can or the like together with an electrolytic solution or the like.

For example, Patent Literature 1 discloses a non-aqueous electrolyte secondary battery including a winding-type electrode assembly in which a positive electrode having a positive electrode mixture layer provided on a band-like positive electrode core and a negative electrode having a negative electrode mixture layer provided on a negative electrode core are wound with a separator interposed therebetween, wherein an exposed portion, formed at an end in a longitudinal direction of the positive electrode core and not provided with the positive electrode mixture layer, is covered with an insulator.

In addition, for example, Patent Literature 2 discloses an electrode constituting a winding-type electrode assembly including a band-like core and a mixture layer provided on the core, wherein an exposed portion in which a surface of the core is exposed is formed at one end in a width direction of the core at a position separated from one end in a longitudinal direction of the core disposed on a winding outer side of the electrode assembly, and the mixture layer has, in at least a part of a first region aligned with the exposed portion in the longitudinal direction of the core, a thin part in which a layer thickness is thinner than that in a second region that is a region other than a first region.

CITATION LIST

PATENT LITERATURE

Patent Literature 1: JP 2008-204920 A
Patent Literature 2: WO 2017/077698 A

SUMMARY

By the way, when the exposed portion formed at the end in the longitudinal direction on the core is covered with the insulator in the electrode such as the positive electrode or the negative electrode, it is possible to suppress occurrence of an internal short circuit due to peeling-off of the mixture layer and an internal short circuit due to a pressing force acting when the electrode is wound. However, since the insulator is provided at the end in the longitudinal direction on the core, the insulator and the separator facing the insulator are brought into close contact with each other, and the electrolytic solution hardly permeates the mixture layer from an end in the longitudinal direction of the electrode, so that rapid charge and discharge characteristics deteriorate.

Therefore, an object of the present disclosure is to provide an electrode for secondary batteries and a secondary battery which are capable of suppressing deterioration of rapid charge and discharge characteristics.

The present disclosure relates to an electrode for secondary batteries constituting a winding-type electrode assembly including a band-like core and a mixture layer disposed on the core, wherein a longitudinal-direction-side first exposed portion in which the mixture layer is not disposed is provided at one end in a longitudinal direction of the core, the longitudinal-direction-side first exposed portion being covered with a first insulator, and a lateral-direction-side exposed portion in which the mixture layer is not disposed is provided at one end in a lateral direction of the core at a position separated from both ends in the longitudinal direction of the core.

In addition, the present disclosure relates to a secondary battery including a winding-type electrode assembly in which a positive electrode and a negative electrode are wound with a separator interposed between the positive electrode and the negative electrode, wherein at least one of the positive electrode or the negative electrode is the above electrode for secondary batteries.

According to the present disclosure, it is possible to provide the electrode for secondary batteries and the secondary battery which are capable of suppressing the deterioration of the rapid charge and discharge characteristics.

BRIEF DESCRIPTION OF DRAWINGS

FIG. 1 is a schematic cross-sectional view of a secondary battery according to an example of an embodiment.
FIG. 2 is a schematic plan view illustrating an example of a configuration of an electrode for secondary batteries.
FIG. 3 is a schematic cross-sectional view of the electrode for secondary batteries taken along line A-A in FIG. 2.
FIG. 4 is a schematic cross-sectional view of the electrode for secondary batteries taken along line B-B in FIG. 2.
FIG. 5 is a schematic plan view illustrating another example of the configuration of the electrode for secondary batteries.

DESCRIPTION OF EMBODIMENTS

Hereinafter, an example of an embodiment of a secondary battery according to the present disclosure will be described in detail.

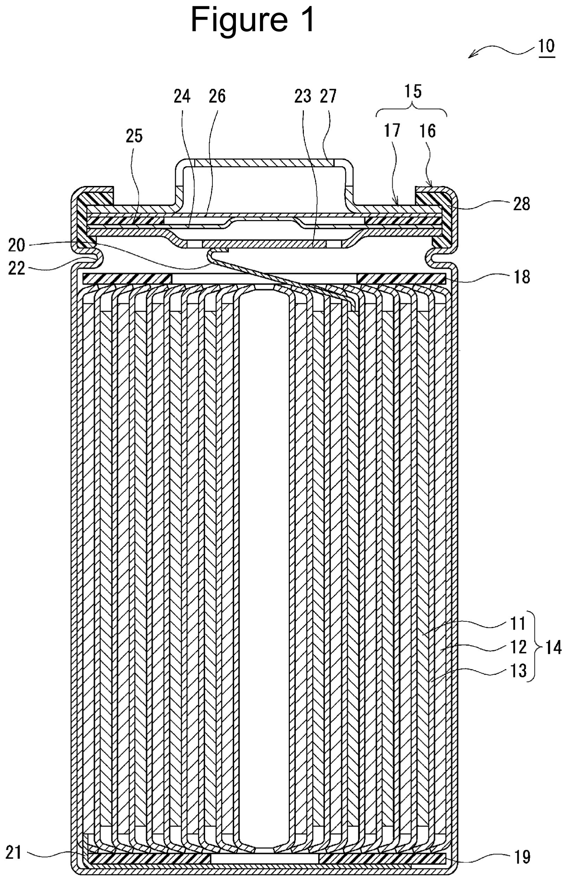

FIG. 1 is a cross-sectional view of a secondary battery according to an example of an embodiment. A secondary battery 10 illustrated in FIG. 1 includes a winding-type electrode assembly 14 in which a positive electrode 11 and a negative electrode 12 are wound with a separator 13 interposed therebetween, an electrolytic solution, insulating plates 18 and 19 disposed on the upper and lower sides of the electrode assembly 14 respectively, and a battery case 15 housing the above-described members. The battery case 15 includes a bottomed cylindrical case body 16 and a sealing assembly 17 that closes an opening of the case body 16. In addition, examples of the battery case 15 include a metal case having a cylindrical shape, a square shape, or the like and a resin case (so-called laminate type) formed by laminating resin sheets.

The electrolytic solution is, for example, an electrolytic solution having lithium ion conductivity. The electrolytic solution is, for example, a non-aqueous electrolytic solution containing a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product in which at least a part of hydrogen in these solvents is substituted with a halogen atom such as fluorine (for example, fluoroethylene carbonate or the like). As the electrolyte salt, for example, a lithium salt such as $LiPF_6$ is used. Note that the non-aqueous electrolytic solution is an example, and may be an aqueous electrolytic solution as long as it is applicable.

The case body 16 is, for example, a bottomed cylindrical metal container. A gasket 28 is provided between the case body 16 and the sealing assembly 17 to keep the interior of the battery airtight. The case body 16 has a projecting portion 22 in which, for example, a part of the side surface thereof projects inward to support the sealing assembly 17. The projecting portion 22 is preferably formed in an annular shape along the circumferential direction of the case body 16, and supports the sealing assembly 17 on the upper surface thereof.

The sealing assembly 17 has a structure in which a filter 23, a lower vent member 24, an insulating member 25, an upper vent member 26, and a cap 27 are stacked in this order from the electrode assembly 14 side. Each member constituting the sealing assembly 17 has, for example, a disk shape or a ring shape, and the members excluding the insulating member 25 are electrically connected to each other. The lower vent member 24 and the upper vent member 26 are connected to each other at the respective centers, and the insulating member 25 is interposed between the respective peripheral portions. When the internal pressure of the secondary battery 10 increases due to heat generated by an internal short circuit or the like, for example, the lower vent member 24 deforms so as to push the upper vent member 26 up toward the cap 27 side and breaks, so that a current path between the lower vent member 24 and the upper vent member 26 is cut off. When the internal pressure further increases, the upper vent member 26 breaks, and gas is discharged from an opening of the cap 27.

In the secondary battery 10 illustrated in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to a lower surface of the filter 23, which is a bottom plate of the sealing assembly 17, by welding or the like, and the cap 27, which is a top plate of the sealing assembly 17 electrically connected to the filter 23, serves as a positive electrode terminal. The negative electrode lead 21 is connected to the inner surface of the bottom of the case body 16 by welding or the like, and the case body 16 serves as a negative electrode terminal.

As the separator 13, for example, a porous sheet having an ion permeation property and an insulation property is used. Specific examples of the porous sheet include a microporous thin film, a woven fabric, and a nonwoven fabric. As a material of the separator, an olefin-based resin such as polyethylene or polypropylene, cellulose, or the like is suitable. The separator 13 may be a laminate including a cellulose fiber layer and a thermoplastic resin fiber layer formed of an olefin-based resin or the like. In addition, a multi-layer separator including a polyethylene layer and a polypropylene layer may be used, and the separator 13 whose surface is coated with a material such as an aramid-based resin or ceramic may be used.

Hereinafter, an electrode for secondary batteries applied to at least one of the positive electrode 11 and the negative electrode 12 will be described. The following electrode for secondary batteries is preferably applied to the positive electrode.

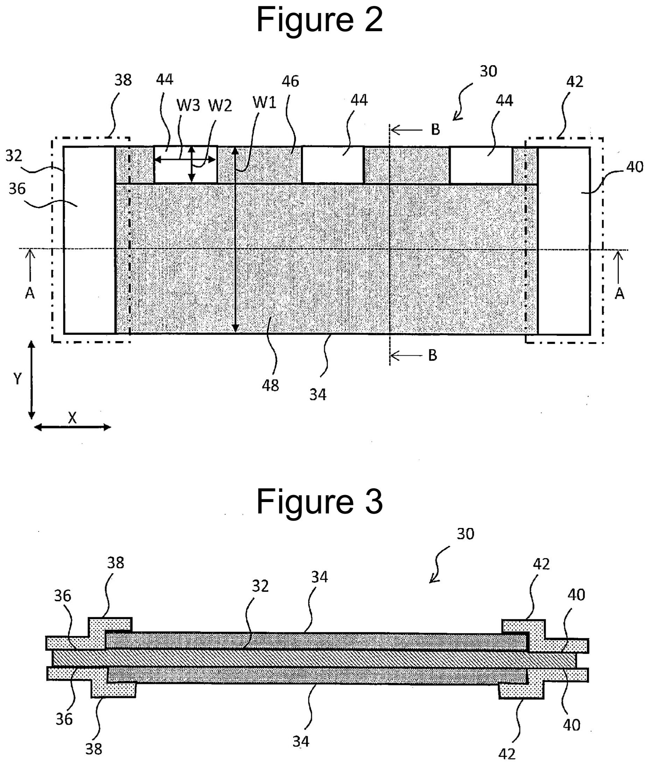

FIG. 2 is a schematic plan view illustrating an example of a configuration of an electrode for secondary batteries, and FIG. 3 is a schematic cross-sectional view of the electrode for secondary batteries taken along line A-A in FIG. 2. An electrode 30 for secondary batteries illustrated in FIGS. 2 and 3 is in a state before winding. In FIG. 2, in order to clarify a configuration of the electrode 30 for secondary batteries, a first insulator 38 and a second insulator 42, which will be described later, are indicated by alternate long and short dash lines as transparent views.

A longitudinal direction (a direction of arrow X) of the electrode 30 for secondary batteries illustrated in FIG. 2 is a winding direction of the electrode assembly 14, and a lateral direction (a direction of arrow Y and a width direction of the electrode 30 for secondary batteries) of the electrode 30 for secondary batteries is a winding axis direction of the electrode assembly 14. Note that one end side in the longitudinal direction of the electrode 30 for secondary batteries may be set as the winding start side of the electrode, and the other end side in the longitudinal direction of the electrode 30 for secondary batteries may be set as a winding end side of the electrode, or conversely, the one end side in the longitudinal direction of the electrode 30 for secondary batteries may be set as the winding end side of the electrode, and the other end side in the longitudinal direction of the electrode 30 for secondary batteries may be set as the winding start side of the electrode.

As illustrated in FIG. 3, the electrode 30 for secondary batteries includes a band-like core 32 and a mixture layer 34 disposed on the band-like core 32. As illustrated in FIG. 3, the mixture layer 34 may be provided on both surfaces of the core 32, or may be provided on one surface of the core 32.

In a case where the electrode 30 for secondary batteries is applied to the negative electrode 12, as a negative electrode core corresponding to the core 32, for example, a foil of metal such as copper or a copper alloy that is stable in a potential range of the negative electrode 12, a film in which the metal is disposed on a surface layer, or the like can be used. In a case where the electrode 30 for secondary batteries is applied to the positive electrode 11, as a positive electrode core corresponding to the core 32, for example, a foil of metal such as aluminum that is stable in a potential range of the positive electrode 11, a film in which the metal is disposed on a surface layer, or the like can be used.

The mixture layer 34 contains, for example, an active material, a binder, and a conductive agent. The mixture layer 34 is formed by applying a mixture slurry containing the active material, the binder, the conductive agent, and the like on the core 32 and compressing the resultant.

In a case where the electrode 30 for secondary batteries is applied to the negative electrode 12, a negative electrode mixture layer corresponding to the mixture layer 34 contains, for example, a negative electrode active material. Examples of the negative electrode active material include materials capable of reversibly occluding and releasing a lithium ion, such as carbon materials including natural graphite and artificial graphite, metals such as Si and Sn, and alloys or oxides thereof. In a case where the electrode 30 for secondary batteries is applied to the positive electrode 11, a positive electrode mixture layer corresponding to the mixture layer 34 contains, for example, a positive electrode active material. Examples of the positive electrode active material include lithium transition metal oxides containing transition metal elements such as Co, Mn, and Ni. Examples of the lithium transition metal oxides include $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$, $Li_xMn_{2-y}M_yO_4$, $LiMPO_4$, and $Li_2MPO_4F$ (M is at least one of Na, Mg, Sc, Y, Mn, Fe, Co, Ni, Cu, Zn, Al, Cr, Pb, Sb, and B, $0 < x \leq 1.2$, $0 < y \leq 0.9$, and $2.0 \leq z \leq 2.3$). Among them, one type may be used alone, or a plurality of types may be used in combination.

Examples of the binder contained in the mixture layer 34 include fluorine-based resins such as polytetrafluoroethylene (PTFE) and polyvinylidene fluoride (PVDF), polyacrylonitrile (PAN), polyimide-based resins, acrylic resins, polyolefin-based resins, styrene-butadiene rubber (SBR), carboxymethyl cellulose (CMC) or a salt thereof, polyacrylic acid (PAA) or a salt thereof, polyvinyl alcohol (PVA), and polyethylene oxide (PEO).

Examples of the conductive agent contained in the mixture layer 34 include carbon materials such as carbon black (CB), acetylene black (AB), Ketjenblack, carbon nanotube (CNT), graphene, and graphite.

As illustrated in FIGS. 2 and 3, a longitudinal-direction-side first exposed portion 36 where the mixture layer 34 is not disposed is provided at one end in the longitudinal direction of the core 32. The longitudinal-direction-side first exposed portion 36 may be provided on one surface of the core 32, or may be provided on both the surfaces of the core 32 as illustrated in FIG. 3. Then, the first insulator 38 is disposed at the one end in the longitudinal direction of the core 32 to cover the longitudinal-direction-side first exposed portion 36. As a result, it is possible to suppress occurrence of an internal short circuit due to peeling-off of the mixture layer 34 and occurrence of an internal short circuit due to a pressing force acting when the electrode is wound. Note that the first insulator 38 desirably covers not only the longitudinal-direction-side first exposed portion 36 but also one end in the longitudinal direction of the mixture layer 34.

In addition, as illustrated in FIGS. 2 and 3, it is preferable that a longitudinal-direction-side second exposed portion 40 where the mixture layer 34 is not disposed is also provided at the other end in the longitudinal direction of the core 32. The longitudinal-direction-side second exposed portion 40 may be provided on one surface of the core 32, or may be provided on both the surfaces of the core 32 as illustrated in FIG. 3. Then, the second insulator 42 is preferably disposed at the other end in the longitudinal direction of the core 32 to cover the second exposure on the longitudinal direction side. As a result, it is possible to further suppress the occurrence of the internal short circuit due to the peeling-off of the mixture layer 34 and the occurrence of the internal short circuit due to the pressing force acting when the electrode is wound. Note that the second insulator 42 desirably covers not only the longitudinal-direction-side second exposed portion 40 but also the other end in the longitudinal direction of the mixture layer 34.

In addition, as illustrated in FIG. 2, at one end of the core 32 in the lateral direction (width direction), a lateral-direction-side exposed portion 44 where the mixture layer 34 is not disposed is provided at a position separated from both the ends of the core 32 in the longitudinal direction. A plurality of the lateral-direction-side exposed portions 44 may be provided at predetermined intervals in the longitudinal direction of the core 32, or only one lateral-direction-side exposed portion 44 may be provided. In addition, in the present embodiment, the lateral-direction-side exposed portion 44 may be provided at one end of the core 32 in the lateral direction, but the lateral-direction-side exposed portions 44 may be provided at both ends of the core 32 in the lateral direction. Further, the lateral-direction-side exposed portion 44 may be provided on one surface of the core 32 or may be provided on both the surfaces of the core 32.

As described above, since the exposed portions at the ends in the longitudinal direction of the core 32 are covered with the insulators, the occurrence of the internal short circuit can be suppressed. On the other hand, since the electrolytic solution hardly permeates the mixture layer 34 from ends in the longitudinal direction of the electrode, there is a concern that rapid charge and discharge characteristics deteriorate. However, as in the present embodiment, when the lateral-direction-side exposed portion 44 is provided at the end in the lateral direction of the core 32, a gap is formed between the lateral-direction-side exposed portion 44 and the separator 13, and a path is secured for the electrolytic solution to permeate the mixture layer 34 from the end in the lateral direction of the electrode. As a result, the deterioration of the rapid charge and discharge characteristics is suppressed.

A ratio (W2/W1) of a length (W2) of the lateral-direction-side exposed portion 44 in the width direction along the lateral direction of the core 32 to a length (W1) of the core 32 in the lateral direction is preferably greater than or equal to 0.6 and less than or equal to 0.99, and more preferably greater than or equal to 0.5 and less than or equal to 0.9, for example, from the viewpoint of increasing the capacity of the battery. Note that a length (W3) of the lateral-direction-side exposed portion 44 in a direction orthogonal to the width direction is not particularly limited, but is preferably greater than or equal to 1/3 and less than or equal to 2 times of the length (W2) of the lateral-direction-side exposed portion 44 in the width direction, for example.

The longitudinal-direction-side first exposed portion 36, the longitudinal-direction-side second exposed portion 40, and the lateral-direction-side exposed portion 44 may be formed by applying the mixture layer 34 onto the core 32 and then removing a part of the mixture layer 34 to expose a part of the core 32, or may be formed by intermittently applying the mixture slurry onto the core 32 to expose a part of the core 32.

The first insulator 38 and the second insulator 42 may be made of a material having no conductivity. For example, a sheet, a tape, or a coating film of a polyolefin resin such as polyethylene, polypropylene, or polybutylene, a polyester resin such as polyvinyl chloride or polyethylene terephthalate, or a resin such as polyimide, polyamide, or polyphenylene sulfide may be used.

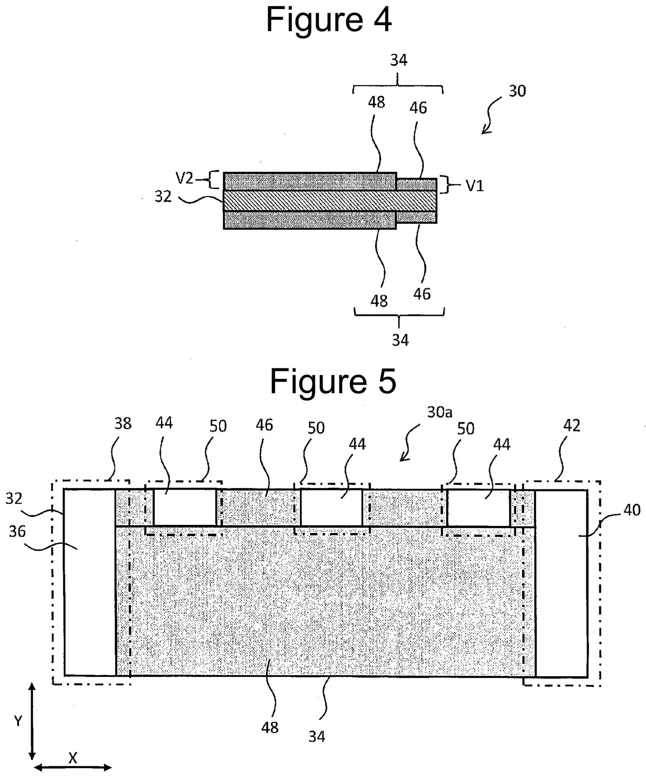

FIG. 4 is a schematic cross-sectional view of the electrode for secondary batteries taken along line B-B in FIG. 2. As illustrated in FIGS. 2 and 4, the mixture layer 34 has a first region 46 aligned with the lateral-direction-side exposed portion 44 in the longitudinal direction of the core 32, and a second region 48 other than the first region 46. As illustrated in FIG. 2, the first region 46 is a region that is aligned with the lateral-direction-side exposed portion 44 in the longitudinal direction of the core 32, and overlaps the lateral-direction-side exposed portion 44 in the longitudinal direction of the core 32. A region partially overlapping the lateral-direction-side exposed portion 44 in the longitudinal direction of the core 32 is the first region 46. In addition, the second region 48 is a region that is not aligned with the lateral-direction-side exposed portion 44 in the longitudinal direction of the core 32 and does not overlap the lateral-direction-side exposed portion 44 in the longitudinal direction. Note that the first region 46 and the second region 48 may be formed on both the surfaces of the core 32, or may be formed on one surface of the core 32.

As illustrated in FIG. 4, a thickness (V1) of the mixture layer in the first region 46 is preferably thinner than a thickness (V2) of the mixture layer in the second region 48. When the thickness (V1) of the mixture layer in the first region 46 is thinner than the thickness (V2) of the mixture layer in the second region 48, the electrolytic solution more easily permeates the mixture layer 34 from the ends in the lateral direction of the electrode 30 for secondary batteries, and the deterioration of the rapid charge and discharge characteristics is further suppressed.

A ratio (V1/V2) of the thickness (V1) of the mixture layer in the first region 46 to the thickness (V2) of the mixture layer in the second region 48 is preferably less than or equal to 0.99, and more preferably greater than or equal to 0.7 and less than or equal to 0.99, for example, from the viewpoint of further suppressing the deterioration of the rapid charge and discharge characteristics. The thickness of the mixture layer can be measured by a contact-type thickness measuring instrument. The thickness of the mixture layer is an average value of measured values measured at 20 points in a measurement target region.

An example of a method for forming the first region 46 and the second region 48 is, for example, a method in which a coating amount of the mixture slurry applied onto the core 32 is set such that the coating amount in the first region 46 is smaller than the coating amount in the second region 48. As a result, if the same density is obtained in the respective regions under the same compression conditions in the respective regions after the application of the mixture slurry, the thickness of the mixture layer in the first region 46 can be made thinner than the thickness of the mixture layer in the second region 48. In addition, another example of the method for forming the first region 46 and the second region 48 is, for example, a method in which, in rolling of a coating film after the application of the mixture slurry, rolling of the coating film in the first region 46 is performed more strongly than rolling of the coating film in the second region 48. As a result, if the coating amounts of the first region 46 and the second region 48 are the same, by making the density in the first region 46 higher than the density in the second region 48, the thickness of the mixture layer in the first region 46 can be made thinner than the thickness of the mixture layer in the second region 48.

FIG. 5 is a schematic plan view illustrating another example of the configuration of the electrode for secondary batteries. In an electrode 30a for secondary batteries in FIG. 5, the same components as those of the electrode 30 for secondary batteries illustrated in FIG. 2 are denoted by the same reference signs, and the description thereof will be omitted. In addition, in FIG. 5, in order to clarify a configuration of the electrode 30a for secondary batteries, the first insulator 38, the second insulator 42, and a third insulator 50 to be described later are indicated by alternate long and short dash lines as transparent views.

As illustrated in FIG. 5, the third insulator 50 where the mixture layer 34 is not disposed is provided at one end in the lateral direction of the core 32 to cover the lateral-direction-side exposed portion 44. The third insulator 50 may cover not only the lateral-direction-side exposed portion 44 but also the mixture layer 34 around the lateral-direction-side exposed portion 44. Since the third insulator 50 is provided, the occurrence of the internal short circuit can be further suppressed. In addition, when the third insulator 50 is provided, a gap is formed between the separator 13 and one end in the lateral direction of the electrode 30 for secondary batteries in which the third insulator 50 is not disposed, and a path is secured for the electrolytic solution to permeate the mixture layer 34 from the end in the lateral direction of the electrode 30 for secondary batteries. As a result, the deterioration of the rapid charge and discharge characteristics is suppressed. The third insulator 50 may be made of the same material as those of the first insulator 38 and the second insulator 42.

EXAMPLES

Hereinafter, the present disclosure will be further described with reference to Examples, but the present disclosure is not limited to these Examples.

<Example 1>

[Preparation of Positive Electrode]

A positive electrode mixture slurry was prepared by mixing 100 parts by mass of $LiCoO_2$, 1 part by mass of acetylene black (AB), and 0.9 parts by mass of polyvinylidene fluoride (PVDF), and adding an appropriate amount of N-methyl-2-pyrrolidone (NMP) thereto. Subsequently, the positive electrode mixture slurry was applied to both surfaces of an aluminum foil having a thickness of 15 μm to obtain a coating film, which was then dried and rolled by a roller. The positive electrode mixture slurry was intermittently applied to the aluminum foil to form a longitudinal-direction-side first exposed portion on the winding start side and three lateral-direction-side exposed portions. A ratio (W2/W1) of a length (W2) of the lateral-direction-side exposed portion in the width direction to a length (W1) of the aluminum foil in the lateral direction was set to 0.9. In addition, a ratio (V1/V2) of a thickness (V1) of a positive electrode mixture layer in a first region to a thickness (V2) of a positive electrode mixture layer in the second region was set to 1. Note that, in all Examples, a thickness of a positive electrode mixture layer in each region was adjusted by changing a coating amount of a positive electrode mixture slurry in each region.

In a positive electrode thus obtained, a polyethylene terephthalate tape as a first insulator was attached so as to cover the longitudinal-direction-side first exposed portion as illustrated in FIG. 2. This was used as the positive electrode of Example 1.

[Preparation of Negative Electrode]

A negative electrode mixture slurry was prepared by mixing 100 parts by mass of graphite powder, 1 part by mass of carboxymethylcellulose sodium (CMC-Na), and 1 part by mass of a dispersion of styrene-butadiene rubber (SBR), and adding an appropriate amount of water thereto. Subsequently, the negative electrode mixture slurry was applied to both surfaces of a copper foil having a thickness of 8 μm to obtain a coating film, which was then dried. Then, the coating film was rolled by a roller to prepare a negative electrode.

[Preparation of Non-Aqueous Electrolytic Solution]

5 parts by mass of vinylene carbonate (VC) was added to 100 parts by mass of a mixed solvent obtained by mixing ethylene carbonate (EC) and dimethyl carbonate (DMC) at a volume ratio of 3:7, and lithium hexafluorophosphate (LiPF$_6$) was dissolved therein at a concentration of 1.5 mol/liter to prepare a non-aqueous electrolytic solution.

[Preparation of Secondary Battery]

A positive electrode lead was attached to the positive electrode, whereas a negative electrode lead was attached to the negative electrode. The positive electrode and the negative electrode were wound with a separator interposed therebetween to obtain a winding-type electrode assembly. Insulating plates were respectively disposed on the upper and lower sides of the electrode assembly, and the electrode assembly was housed in a case body. The negative electrode lead was welded to a bottom of the case body, and the positive electrode lead was welded to a sealing assembly. After the non-aqueous electrolytic solution was injected into the case body, an opening of the case body was sealed with the sealing assembly via a gasket to prepare a secondary battery.

<Example 2>

A secondary battery was prepared in the same manner as in Example 1 except that, in the preparation of the positive electrode, a longitudinal-direction-side second exposed portion on the winding end side and three lateral-direction-side exposed portions were formed as exposed portions, and a polyethylene terephthalate tape as a second insulator was attached so as to cover the longitudinal-direction-side second exposed portion.

<Example 3>

A secondary battery was prepared in the same manner as in Example 1 except that, in the preparation of the positive electrode, a longitudinal-direction-side first exposed portion on the winding start side, a longitudinal-direction-side second exposed portion on the winding end side, and three lateral-direction-side exposed portions were formed as exposed portions, a polyethylene terephthalate tape as a first insulator was attached so as to cover the longitudinal-direction-side first exposed portion, and a polyethylene terephthalate tape as a second insulator was attached so as to cover the longitudinal-direction-side second exposed portion.

<Example 4>

A secondary battery was prepared in the same manner as in Example 3 except that, in the preparation of the positive electrode, the ratio (V1/V2) of the thickness (V1) of the positive electrode mixture layer in the first region to the thickness (V2) of the positive electrode mixture layer in the second region was set to 1.05.

<Example 5>

A secondary battery was prepared in the same manner as in Example 3 except that, in the preparation of the positive electrode, the ratio (V1/V2) of the thickness (V1) of the positive electrode mixture layer in the first region to the thickness (V2) of the positive electrode mixture layer in the second region was set to 0.995.

<Example 6>

A secondary battery was prepared in the same manner as in Example 3 except that, in the preparation of the positive electrode, the ratio (V1/V2) of the thickness (V1) of the positive electrode mixture layer in the first region to the thickness (V2) of the positive electrode mixture layer in the second region was set to 0.95.

<Example 7>

A secondary battery was prepared in the same manner as in Example 3 except that, in the preparation of the positive electrode, the ratio (V1/V2) of the thickness (V1) of the positive electrode mixture layer in the first region to the thickness (V2) of the positive electrode mixture layer in the second region was set to 0.9.

<Example 8>

A secondary battery was prepared in the same manner as in Example 3 except that, in the preparation of the positive electrode, the ratio (V1/V2) of the thickness (V1) of the positive electrode mixture layer in the first region to the thickness (V2) of the positive electrode mixture layer in the second region was set to 0.7.

<Example 9>

A secondary battery was prepared in the same manner as in Example 3 except that, in preparation of a positive electrode, the ratio (V1/V2) of the thickness (V1) of the positive electrode mixture layer in the first region to the thickness (V2) of the positive electrode mixture layer in the second region was set to 0.6.

<Example 10>

A secondary battery was prepared in the same manner as in Example 3 except that, in the preparation of the positive electrode, the ratio (V1/V2) of the thickness (V1) of the positive electrode mixture layer in the first region to the thickness (V2) of the positive electrode mixture layer in the second region was set to 0.5.

<Example 11>

A secondary battery was prepared in the same manner as in Example 6, except that, in the preparation of the positive electrode, the ratio (W2/W1) of the length (W2) of the lateral-direction-side exposed portion in the width direction to the length (W1) of the aluminum foil in the lateral direction was set to 0.99.

<Example 12>

A secondary battery was prepared in the same manner as in Example 6, except that, in the preparation of the positive electrode, the ratio (W2/W1) of the length (W2) of the lateral-direction-side exposed portion in the width direction to the length (W1) of the aluminum foil in the lateral direction was set to 0.8.

<Example 13>

A secondary battery was prepared in the same manner as in Example 6, except that, in the preparation of the positive electrode, the ratio (W2/W1) of the length (W2) of the lateral-direction-side exposed portion in the width direction to the length (W1) of the aluminum foil in the lateral direction was set to 0.6.

<Example 14>

A secondary battery was prepared in the same manner as in Example 6, except that, in the preparation of the positive electrode, the ratio (W2/W1) of the length (W2) of the lateral-direction-side exposed portion in the width direction to the length (W1) of the aluminum foil in the lateral direction was set to 0.5.

<Comparative Example 1>

A secondary battery was prepared in the same manner as in Example 1 except that, in the preparation of the positive electrode, a longitudinal-direction-side first exposed portion on the winding start side and a longitudinal-direction-side second exposed portion on the winding end side were formed as exposed portions, a polyethylene terephthalate tape as a first insulator was attached so as to cover the longitudinal-direction-side first exposed portion, and a polyethylene terephthalate tape as a second insulator was attached so as to cover the longitudinal-direction-side second exposed portion.

[Rapid Charge and Discharge Test]

Each of the secondary batteries in Examples and Comparative Example was charged at a constant current of 1.5 C under an environment of 25°C until the battery voltage reached 4.2 V, and then discharged at a constant current of 1.5 C until the battery voltage reached 2.7 V. The charging and discharging were performed by 300 cycles, and a capacity retention rate was calculated by the following equation. The results are shown in Table 1. As the capacity retention rate increases, the deterioration of the rapid charge and discharge characteristics is suppressed more.

Capacity retention rate (%) = (discharge capacity at 300th cycle/discharge capacity at 1st cycle) × 100

[Short Circuit Test]

Each of the secondary batteries of Examples and Comparative Example in a state of being charged at a constant current of 0.5 C under an environment of 60°C until the battery voltage reached 4.2 V was kept under an environment of 60°C for 1 month to conduct an internal short circuit acceleration test. The number of internal short circuit occurrences was counted among 50 test samples. The results are summarized in Table 1.

[Table 1]

| | First insulator | Second insulator | Lateral-direction-side exposed portion | V1/V2 | W2/W1 | Number of short circuit occurrences | Discharge capacity retention rate (%) |
|---|---|---|---|---|---|---|---|
| Example 1 | Present | Absent | Present | 1 | 0.9 | 7/50 | 82 |
| Example 2 | Absent | Present | Present | 1 | 0.9 | 9/50 | 81 |
| Example 3 | Present | Present | Present | 1 | 0.9 | 6/50 | 85 |
| Example 4 | Present | Present | Present | 1.05 | 0.9 | 6/50 | 83 |
| Example 5 | Present | Present | Present | 0.995 | 0.9 | 6/50 | 90 |
| Example 6 | Present | Present | Present | 0.95 | 0.9 | 6/50 | 92 |
| Example 7 | Present | Present | Present | 0.9 | 0.9 | 6/50 | 92 |
| Example 8 | Present | Present | Present | 0.7 | 0.9 | 6/50 | 90 |
| Example 9 | Present | Present | Present | 0.6 | 0.9 | 6/50 | 85 |
| Example 10 | Present | Present | Present | 0.5 | 0.9 | 6/50 | 80 |
| Example 11 | Present | Present | Present | 0.95 | 0.99 | 6/50 | 96 |
| Example 12 | Present | Present | Present | 0.95 | 0.8 | 6/50 | 96 |
| Example 13 | Present | Present | Present | 0.95 | 0.6 | 6/50 | 95 |
| Example 14 | Present | Present | Present | 0.95 | 0.5 | 9/50 | 94 |
| Comparative Example 1 | Present | Present | Absent | 1 | - | 6/50 | 60 |

V1: Thickness of positive electrode mixture layer in first region
V2: Thickness of positive electrode mixture layer in second region
W1: Length of aluminum foil in lateral direction
W2: Length of lateral-direction-side exposed portion in width direction

In Examples 1 to 14, the number of short circuit occurrences was the same as that in Comparative Example 1, and the capacity retention rate in the rapid charge and discharge test was higher than that in Comparative Example 1. From this result, it can be said that the deterioration of the rapid charge and discharge characteristics can be suppressed by providing the lateral-direction-side exposed portion where the mixture layer is not disposed at one end in the lateral direction of the core in the electrode in which the longitudinal-direction-side exposed portion of the core is covered with the insulator, at the position separated from both the ends in the longitudinal direction of the core.

[Supplementary Notes]

(1) An electrode for secondary batteries constituting a winding-type electrode assembly including a band-like core and a mixture layer disposed on the core, wherein

a longitudinal-direction-side first exposed portion in which the mixture layer is not disposed is provided at one end in a longitudinal direction of the core, the longitudinal-direction-side first exposed portion being covered with a first insulator, and
a lateral-direction-side exposed portion in which the mixture layer is not disposed is provided at one end in a lateral direction of the core at a position separated from both ends in the longitudinal direction of the core.

(2) The electrode for secondary batteries according to (1), wherein a longitudinal-direction-side second exposed portion where the mixture layer is not disposed is provided at another end in the longitudinal direction of the core, the longitudinal-direction-side second exposed portion being covered with a second insulator.
(3) The electrode for secondary batteries according to (1) or (2), wherein

the mixture layer has a first region aligned with the lateral-direction-side exposed portion in the longitudinal direction of the core, and a second region that is a region other than the first region, and
a thickness (V1) of the mixture layer in the first region is thinner than a thickness (V2) of the mixture layer in the second region.

(4) The electrode for secondary batteries according to (4), wherein a ratio (V1/V2) of the thickness (V1) of the mixture layer in the first region to the thickness (V2) of the mixture layer in the second region is less than or equal to 0.99.
(5) The electrode for secondary batteries according to any one of (1) to (4), wherein a ratio (W2/W1) of a length (W2) of the lateral-direction-side exposed portion in a width direction along the lateral direction of the core to a length (W1) of the core in the lateral direction is greater than or equal to 0.6 and less than or equal to 0.99.
(6) The electrode for secondary batteries according to (4), wherein a ratio (V1/V2) of the thickness (V1) of the mixture layer in the first region to the thickness (V2) of the mixture layer in the second region is greater than or equal to 0.7 and less than or equal to 0.99.
(7) A secondary battery including a winding-type electrode assembly in which a positive electrode and a negative electrode are wound with a separator interposed between the positive electrode and the negative electrode, wherein at least one of the positive electrode or the negative electrode is the electrode for secondary batteries according to any one of (1) to (6).

REFERENCE SIGNS LIST

| 10 | Secondary battery |
| 11 | Positive electrode |
| 12 | Negative electrode |
| 13 | Separator |
| 14 | Electrode assembly |
| 15 | Battery case |
| 16 | Case body |
| 17 | Sealing assembly |
| 18 | Insulating plate |
| 18, 19 | Insulating plate |
| 20 | Positive electrode lead |
| 21 | Negative electrode lead |
| 22 | Projecting portion |
| 23 | Filter |
| 24 | Lower vent member |
| 25 | Insulating member |
| 26 | Upper vent member |
| 27 | Cap |
| 28 | Gasket |
| 30, 30a | Electrode for secondary batteries |
| 32 | Core |
| 34 | Mixture layer |
| 36 | Longitudinal-direction-side first exposed portion |
| 38 | First insulator |
| 40 | Longitudinal-direction-side second exposed portion |
| 42 | Second insulator |

44        Lateral-direction-side exposed portion
46        First region
48        Second region
50        Third insulator

**Claims**

1. An electrode for secondary batteries constituting a winding-type electrode assembly including a band-like core and a mixture layer disposed on the core, wherein

   a longitudinal-direction-side first exposed portion in which the mixture layer is not disposed is provided at one end in a longitudinal direction of the core, the longitudinal-direction-side first exposed portion being covered with a first insulator, and
   a lateral-direction-side exposed portion in which the mixture layer is not disposed is provided at one end in a lateral direction of the core at a position separated from both ends in the longitudinal direction of the core.

2. The electrode for secondary batteries according to claim 1, wherein a longitudinal-direction-side second exposed portion where the mixture layer is not disposed is provided at another end in the longitudinal direction of the core, the longitudinal-direction-side second exposed portion being covered with a second insulator.

3. The electrode for secondary batteries according to claim 1 or 2, wherein

   the mixture layer has a first region aligned with the lateral-direction-side exposed portion in the longitudinal direction of the core, and a second region that is a region other than the first region, and
   a thickness (V1) of the mixture layer in the first region is thinner than a thickness (V2) of the mixture layer in the second region.

4. The electrode for secondary batteries according to claim 3, wherein a ratio (V1/V2) of the thickness (V1) of the mixture layer in the first region to the thickness (V2) of the mixture layer in the second region is less than or equal to 0.99.

5. The electrode for secondary batteries according to claim 1 or 2, wherein a ratio (W2/W1) of a length (W2) of the lateral-direction-side exposed portion in a width direction along the lateral direction of the core to a length (W1) of the core in the lateral direction is greater than or equal to 0.6 and less than or equal to 0.99.

6. The electrode for secondary batteries according to claim 4, wherein the ratio (V1/V2) of the thickness (V1) of the mixture layer in the first region to the thickness (V2) of the mixture layer in the second region is greater than or equal to 0.7 and less than or equal to 0.99.

7. A secondary battery comprising a winding-type electrode assembly in which a positive electrode and a negative electrode are wound with a separator interposed between the positive electrode and the negative electrode, wherein at least one of the positive electrode or the negative electrode is the electrode for secondary batteries according to any one of claims 1 or 2.

# Figure 1

# Figure 2

# Figure 3

# Figure 4

# Figure 5

## INTERNATIONAL SEARCH REPORT

| International application No. |
|---|
| **PCT/JP2024/018355** |

**A.    CLASSIFICATION OF SUBJECT MATTER**

*H01M 4/13*(2010.01)i; *H01M 10/0587*(2010.01)i; *H01M 50/586*(2021.01)i; *H01M 50/591*(2021.01)i; *H01M 50/595*(2021.01)i
  FI:    H01M4/13; H01M10/0587; H01M50/586; H01M50/591 101; H01M50/595

According to International Patent Classification (IPC) or to both national classification and IPC

**B.    FIELDS SEARCHED**

Minimum documentation searched (classification system followed by classification symbols)

H01M4/13; H01M10/0587; H01M50/586; H01M50/591; H01M50/595

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | WO 2018/079291 A1 (SANYO ELECTRIC CO., LTD.) 03 May 2018 (2018-05-03) paragraphs [0034]-[0039], fig. 3 | 1-7 |
| Y | WO 2020/209176 A1 (MURATA MANUFACTURING CO., LTD.) 15 October 2020 (2020-10-15) claim 1, paragraph [0014], fig. 2 | 1-7 |
| Y | JP 2005-285691 A (HITACHI MAXELL LTD.) 13 October 2005 (2005-10-13) claim 1, paragraph [0010], fig. 1, 3 | 1-7 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 August 2024** | **13 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/018355**

| Patent document cited in search report | Publication date (day/month/year) | Patent family member(s) | Publication date (day/month/year) |
|---|---|---|---|
| WO 2018/079291 A1 | 03 May 2018 | US 2019/0252667 A1 paragraphs [0042]-[0047], fig. 3 <br> CN 109891640 A | |
| WO 2020/209176 A1 | 15 October 2020 | US 2022/0045367 A1 claim 1, paragraph [0038], fig. 2 <br> CN 113646917 A | |
| JP 2005-285691 A | 13 October 2005 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008204920 A
- WO 2017077698 A